# EUROPEAN PATENT APPLICATION

(11) **EP 4 328 202 A1**
(43) Date of publication of application: **28.02.2024**
(21) Application number: 22791682.2
(22) Date of filing: 15.04.2022
(51) Int. Cl.: C03C 27/12, B60J 1/00

(54) **METHOD FOR PRODUCING LAMINATED GLASS FOR VEHICLES, AND AUTOMOBILE**

(30) Priority: 20.04.2021 JP 2021071149
(71) Applicant: AGC INC., Chiyoda-ku, Tokyo 1008405 (JP)
(72) Inventor: TAKABAYASHI, Toru, Tokyo 100-8405 (JP); YAMAKAWA, Hiroshi, Tokyo 100-8405 (JP); NISHIHAMA, Jiro, Tokyo 100-8405 (JP)
(74) Representative: Müller-Boré & Partner Patentanwälte PartG mbB
(86) International application number: PCT/JP2022/017957
(87) International publication number: WO 2022/224908

(57) **Abstract**

A method for producing laminated glass for vehicle in which a first glass plate at least partially having a first curvature and a second glass plate at least partially having a second curvature that is lower than the first curvature are bonded to each other through an interlayer film includes bending the first glass plate at least partially having the first curvature and the second glass plate at least partially having the second curvature, and bonding the first glass plate and the second glass plate through the interlayer film. In the bonding, the first glass plate is deformed such that the first curvature is reduced and the second glass plate is deformed such that the second curvature is increased, thereby adjusting tensile stress induced at an outer periphery of a main surface of the first glass plate in a circumferential direction and compressive stress induced at an outer periphery of a main surface of the second glass plate in a circumferential direction, so that surface stress of the laminated glass for vehicle is adjusted.

## Description

### Technical Field

The present disclosure relates to a method for producing laminated glass for vehicle and an automobile.

### Background Art

For vehicles such as automobiles, various measures for improving safety performance of occupants, pedestrians, and the like have been studied from the viewpoint of body protection of pedestrians and the like during a collision with pedestrians, occupants of bicycles and two-wheeled vehicles (pedestrians pulling bicycles and two-wheeled vehicles, and the like), and the like as well as from the viewpoint of body protection of occupants of the vehicle.

In order to improve safety performance of a vehicle, for example, Patent Document 1 proposes a glass connection structure for vehicle in which a rear end portion of a cowl louver and a front end portion of a windshield glass are connected to each other by a molding, a plate-shaped core grid is embedded in the molding, and a fragile portion that is easily fractured is included in the core grid. In this glass connection structure for vehicle, when impact is applied from forward to downward with respect to surroundings of the cowl louver and the windshield glass due to a front collision of the pedestrian with the automobile, body protection performance for the pedestrian is ensured by separating the connected cowl louver and windshield glass from each other.

### Related Art Document

### Patent Document

Patent Document 1: Japanese Unexamined Patent Application No. 2017-213928

### Summary of the Invention

### Problems to be Solved by the Invention

For windshield glass or the like used in the glass connection structure for the vehicle according to Patent Document 1 or the like, laminated glass formed by bonding two glass plates through an interlayer film is generally used. In a case where there is a difference in shape due to a difference in curvature radius or the like between two glass plates forming laminated glass, when the two glass plates are bonded to each other through an interlayer film, opposite phase surface stress is induced in the two glass plates, and it has been difficult to design the strength of the laminated glass to a desired magnitude.

In particular, for a windshield for vehicle, it is important to design the laminated glass to have a desired strength from the viewpoint of body protection of a vehicle occupant and body protection of a pedestrian or the like during a collision with the pedestrian or the like.

One aspect of the present disclosure is to provide a method for producing laminated glass for vehicle in which strength of laminated glass for vehicle can be adjusted.

### Means for Solving the Problem

According to an aspect of the present disclosure, a method for producing laminated glass for vehicle in which a first glass plate at least partially having a first curvature and a second glass plate at least partially having a second curvature that is lower than the first curvature are bonded to each other through an interlayer film includes bending flat glass plates to obtain the first glass plate at least partially having the first curvature and the second glass plate at least partially having the second curvature, and bonding the first glass plate and the second glass plate through the interlayer film. In the bonding, by bonding the first glass plate and the second glass plate through the interlayer film, the first glass plate is deformed such that the first curvature is reduced and the second glass plate is deformed such that the second curvature is increased, thereby adjusting tensile stress induced at an outer periphery of a main surface of the first glass plate in a circumferential direction and compressive stress induced at an outer periphery of a main surface of the second glass plate in a circumferential direction, so that surface stress of the laminated glass for vehicle including the tensile stress and the compressive stress is adjusted.

### Effects of the Invention

According to an aspect of the method for producing laminated glass for vehicle of the present disclosure, strength of laminated glass for vehicle can be adjusted.

### Brief Description of Drawings

[FIG. 1] FIG. 1 is a front view of an automobile provided with laminated glass for vehicle that is obtained by a method for producing laminated glass for vehicle according to an embodiment of the present disclosure.
[FIG. 2] FIG. 2 is a plan view of the laminated glass for vehicle illustrated in FIG. 1.
[FIG. 3] FIG. 3 is a partial cross-sectional view of the laminated glass for vehicle illustrated in FIG. 1.
[FIG. 4] FIG. 4 is an explanatory view illustrating a state in which tensile stress is induced at the outer periphery of a vehicle-exterior side glass plate in a state in which the vehicle-exterior side glass plate and a vehicle-interior side glass plate are bonded to each other through an interlayer film.
[FIG. 5] FIG. 5 is an explanatory view illustrating a state in which compressive stress is induced at the outer periphery of the vehicle-interior side glass plate in a state in which the vehicle-exterior side glass plate and the vehicle-interior side glass plate are bonded to each other through the interlayer film.
[FIG. 6] FIG. 6 is a flowchart illustrating an example of the method for producing laminated glass for vehicle according to the embodiment of the present disclosure.
[FIG. 7] FIG. 7 is an explanatory view illustrating the state in which vehicle-exterior side glass plate and the vehicle-interior side glass plate are bonded to each other.
[FIG. 8] FIG. 8 is a flowchart illustrating an example of a step of preparing a flat glass plate (Step S11).
[FIG. 9] FIG. 9 is a diagram illustrating an example of a relationship between a maximum gap between the vehicle-exterior side glass plate and the vehicle-interior side glass plate before the vehicle-exterior side glass plate and the vehicle-interior side glass plate are bonded to each other and compressive stress induced on an outer periphery of the vehicle-interior side glass plate in a circumferential direction.

### Detailed Description of the Invention

Hereinafter, an embodiment of the present disclosure will be described in detail. In order to facilitate understanding of the description, the same components are denoted by the same reference numerals in the drawings, and redundant description will be omitted. Furthermore, the scale of each member in the drawings may be different from the actual scale. In the present specification, the expression "to" indicating a numerical range means that the numerical values described before and after the expression are included as the lower limit value and the upper limit value unless otherwise specified.

A method for producing laminated glass for vehicle according to the present embodiment will be described. Before describing the method for producing laminated glass for vehicle according to the present embodiment, laminated glass for vehicle obtained by the method for producing laminated glass for vehicle according to the present embodiment will be described.

The vehicle laminated glass includes window glass for automobile such as front glass, rear glass, side glass, roof glass, and quarter glass, window glass for transportation vehicle such as trains and locomotives, window glass for construction vehicle such as bulldozers, window glass for flying objects such as airplanes, and other window glass for special vehicle. In the present embodiment, a case where the vehicle laminated glass is used for a windshield of an automobile will be described.

### <Laminated Glass for Vehicle>

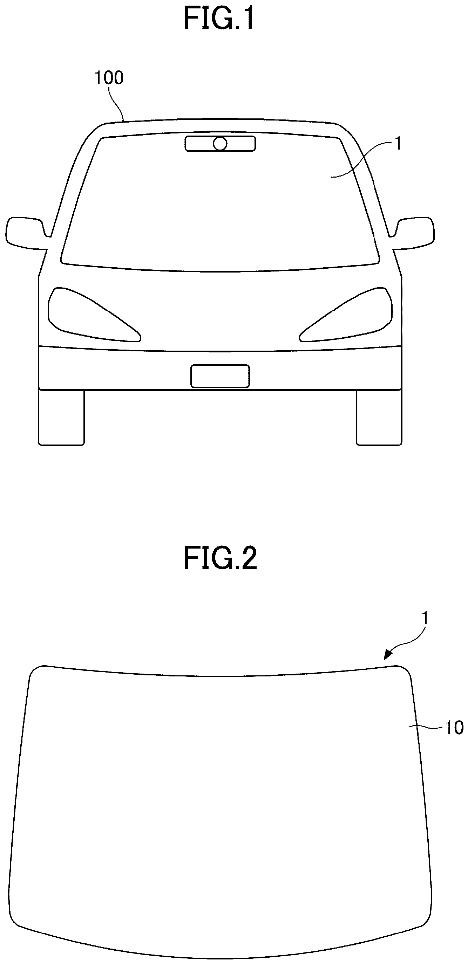

The vehicle laminated glass will be described. FIG. 1 is a front view of an automobile provided with vehicle laminated glass obtained by the method for producing laminated glass for vehicle according to the present embodiment. As illustrated in FIG. 1, vehicle laminated glass 1 obtained by the method for producing laminated glass for vehicle according to the present embodiment is used as a windshield of an automobile 100.

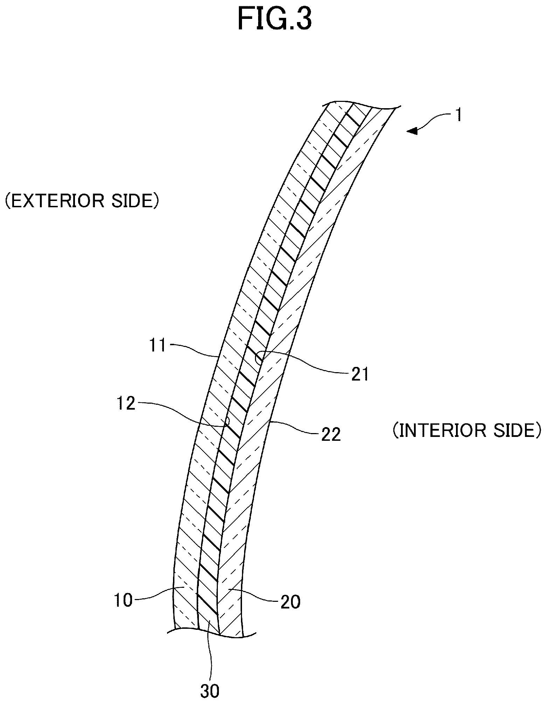

FIG. 2 is a plan view of the vehicle laminated glass 1 illustrated in FIG. 1, and FIG. 3 is a partial cross-sectional view of the vehicle laminated glass 1 illustrated in FIG. 1. In FIG. 1 and FIG. 2, one of main surfaces of the vehicle laminated glass 1 is referred to as a vehicle-exterior side, and the other is referred to as a vehicle-interior side. In FIG. 2, the front surface of the vehicle laminated glass is referred to as the vehicle-exterior side, and the back surface is referred to as the vehicle-interior side. In FIG. 2, the longitudinal direction of the vehicle laminated glass 1 corresponds to, for example, the vehicle width direction of the vehicle, but may correspond to the vertical direction of the vehicle. In FIG. 3, the left side is referred to as the vehicle-exterior side and the right side is referred to as the vehicle-interior side.

As illustrated in FIG. 2, the vehicle laminated glass 1 is formed in a substantially trapezoidal shape in a front view and has rounded corners. As illustrated in FIG. 3, the vehicle laminated glass 1 also has a curved surface in which the main surface bulges towards the outside of the vehicle, and has a predetermined curvature. The vehicle laminated glass 1 may be entirely or partially curved in such a manner as to bulge towards the outside of the vehicle. In such a case, each of a vehicle-exterior side glass plate 10 and a vehicle-interior side glass plate 20 can be processed and curved to have a desired predetermined curvature in one direction or two directions by a bending process described later.

As illustrated in FIG. 3, in the vehicle laminated glass 1, the vehicle-exterior side glass plate 10 that is a first glass plate and the vehicle-interior side glass plate 20 that is a second glass plate are bonded through an interlayer film 30. The vehicle-exterior side glass plate 10 has a first surface 11 that is a vehicle-exterior side surface (main surface) and a second surface 12 that is a vehicle-interior side surface (main surface), and the vehicle-interior side glass plate 20 has a third surface 21 that is another vehicle-exterior side surface (main surface) and a fourth surface 22 that is another vehicle-interior side surface (main surface).

The material constituting the vehicle-exterior side glass plate 10 and the vehicle-interior side glass plate 20 (hereinafter also simply referred to as glass plates collectively) in the laminated glass 1 is preferably inorganic glass. Suitable inorganic glass may include soda lime silicate glass, aluminosilicate glass, borate glass, lithium aluminosilicate glass, borosilicate glass, and the like. The process of forming the glass plates made of inorganic glass is not particularly limited, however, the glass plates are preferably glass plates formed by a float process or the like, for example. The glass plates may be non-tempered glass (raw glass) . The non-tempered glass is obtained by forming molten glass into a plate shape and annealing, and is not subjected to a tempering treatment such as an air-cooled tempering treatment or a chemically tempering treatment. By using the non-tempered glass, even when the glass breaks due to impact, a net-like or spider-web-like crack or the like is less likely to occur, and the field of view of an occupant can be ensured even during an accident.

The thicknesses of the vehicle-exterior side glass plate 10 and the vehicle-interior side glass plate 20 may be the same or different from each other. The thickness of the vehicle-exterior side glass plate 10 may be 1.1 mm to 3.5 mm. The thickness of the vehicle-interior side glass plate 20 may be 0.5 mm to 2.5 mm.

The thicknesses of the entire vehicle laminated glass 1 can be set to 2.3 mm to 8.0 mm.

The thickness of the vehicle-exterior side glass plate 10 is preferably greater than the thickness of the vehicle-interior side glass plate 20. In such a case, the thickness difference between the vehicle-exterior side glass plate 10 and the vehicle-interior side glass plate 20 is preferably less than or equal to 0.7 mm, more preferably less than or equal to 0.6 mm, and still more preferably less than or equal to 0.5 mm. When the difference is less than or equal to 0.7 mm, the thickness and weight of the vehicle-interior side glass plate 20 can be reduced while the vehicle-exterior side glass plate 10 exhibits strength.

The configurations (the materials constituting the glass plates, the production method of the glass plates, and the like) of the vehicle-exterior side glass plate 10 and the vehicle-interior side glass plate 20 may be the same or may be different from each other.

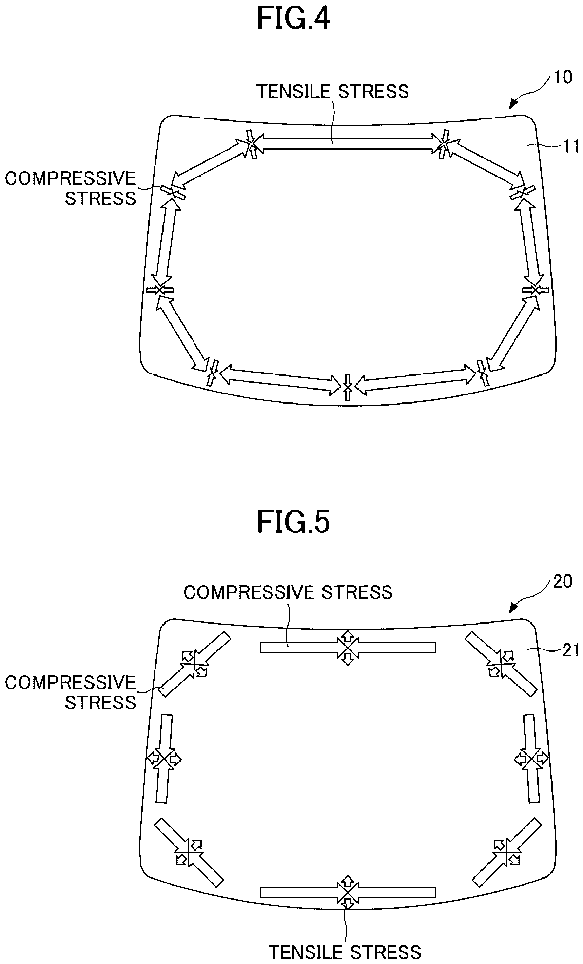

In the vehicle-exterior side glass plate 10 and the vehicle-interior side glass plate 20, circumferential stress (hoop stress) is induced at the outer periphery of the main surface of each glass plate in a state where these glass plates are bonded through the interlayer film 30. FIG. 4 is an explanatory view illustrating a state in which tensile stress is induced at the outer periphery of the vehicle-exterior side glass plate 10 in a state in which the vehicle-exterior side glass plate 10 and the vehicle-interior side glass plate 20 are bonded to each other through the interlayer film 30. As illustrated in FIG. 4, in the vehicle-exterior side glass plate 10, the tensile stress is induced at the outer periphery of the first surface 11 that is the vehicle-exterior side main surface in the circumferential direction. The tensile stress is preferably induced in a region that is within 100 mm from the outer periphery of the first surface 11 of the vehicle-exterior side glass plate 10 in the in-plane direction. When the tensile stress is induced within the range of the above-described region, the effect of the tensile stress can be sufficiently exerted on the outer periphery of the first surface 11 of the vehicle-exterior side glass plate 10. Furthermore, in the vehicle-exterior side glass plate 10, compressive stress is induced in a direction orthogonal to the circumferential direction of the first surface 11.

FIG. 5 is an explanatory view illustrating a state in which compressive stress is induced at the outer periphery of the vehicle-interior side glass plate 20 in the state in which the vehicle-exterior side glass plate 10 and the vehicle-interior side glass plate 20 are bonded to each other through the interlayer film 30. As illustrated in FIG. 5, in the vehicle-interior side glass plate 20, compressive stress is induced at the outer periphery of the fourth surface 22 that is the vehicle-interior side main surface in the circumferential direction. The compressive stress is preferably induced in a region that is within 100 mm from the outer periphery of the fourth surface 22 in the in-plane direction. When the compressive stress is induced within the range of the above-described region, the effect of the compressive stress can be sufficiently exerted on the outer periphery of the fourth surface 22 of the vehicle-interior side glass plate 20. Furthermore, in the vehicle-interior side glass plate 20, tensile stress is induced in a direction orthogonal to the circumferential direction of the fourth surface 22.

The interlayer film 30 is disposed between the vehicle-exterior side glass plate 10 and the vehicle-interior side glass plate 20. The interlayer film 30 bonds the vehicle-exterior side glass plate 10 and the vehicle-interior side glass plate 20 together. The material of the interlayer film 30 is not particularly limited, however, it is preferably a thermoplastic resin. Examples of the thermoplastic resin include conventionally used thermoplastic resin such as a plasticized polyvinyl acetal-based resin, a plasticized polyvinyl chloride-based resin, a saturated polyester-based resin, a plasticized saturated polyester-based resin, a polyurethane-based resin, a plasticized polyurethane-based resin, an ethylene-vinyl acetate copolymer-based resin, an ethylene-ethyl acrylate copolymer-based resin, a cycloolefin polymer resin, an ionomer resin, and the like. Furthermore, a resin composition containing modified block copolymer hydride as described in Japanese Patent No. 6065221 can also be suitably employed. Among the above-described resins, the plasticized polyvinyl acetal-based resin is preferably used because of its excellence in terms of balance of performances, such as transparency, weather resistance, strength, bond strength, resistance to penetration, absorbability for impact energy, humidity resistance, thermal insulating property, and sound insulating property. The above-described thermoplastic resin may be used singly, or two or more types of thermoplastic resins may be used in combination. The term "plasticized" in the above-described plasticized polyvinyl acetal-based resin means that the resin is plasticized by adding a plasticizing agent. The same applies to the other plasticized resins.

The interlayer film 30 may be a resin not containing a plasticizer, for example, an ethylene-vinyl acetate copolymer resin.

The above-described polyvinyl acetal-based resin may include, for example, polyvinyl formal resin that is obtained by reacting polyvinyl alcohol (PVA) and formaldehyde, narrowly defined polyvinyl acetal-based resin that is obtained by reacting PVA and an acetaldehyde, polyvinyl butyral resin (PVB) that is obtained by reacting PVA and n-butyl aldehyde, and the like. Especially, PVB is preferable, because of its excellence in terms of balance of performances, such as transparency, weather resistance, strength, bond strength, resistance to penetration, absorbability for impact energy, humidity resistance, thermal insulating property, and sound insulating property. The above-mentioned resins may be used singly, or two or more types of polyvinyl acetal-based resins may be used in combination.

A shielding layer for protecting a sealant or the like that bonds the vehicle laminated glass 1 to a vehicle body and holds the laminated glass may be provided at a peripheral edge of the vehicle laminated glass 1. The shielding layer can be formed by, for example, applying a ceramic color paste of a low-lightness color such as black, gray, or brown color containing a meltable glass frit containing a black pigment, and then firing the paste. The shielding layer may be formed on the peripheral edge of one or more of the second main surface 12, the third main surface 21, and the fourth main surface 22 (FIG. 2) of the vehicle laminated glass 1, and preferably on the peripheral edge of at least one of the second main surface 12 and the fourth main surface 22. The shielding layer may be provided within 10 mm to 300 mm from the peripheral edge end of the glass plate.

### <Method for Producing Laminated Glass for Vehicle>

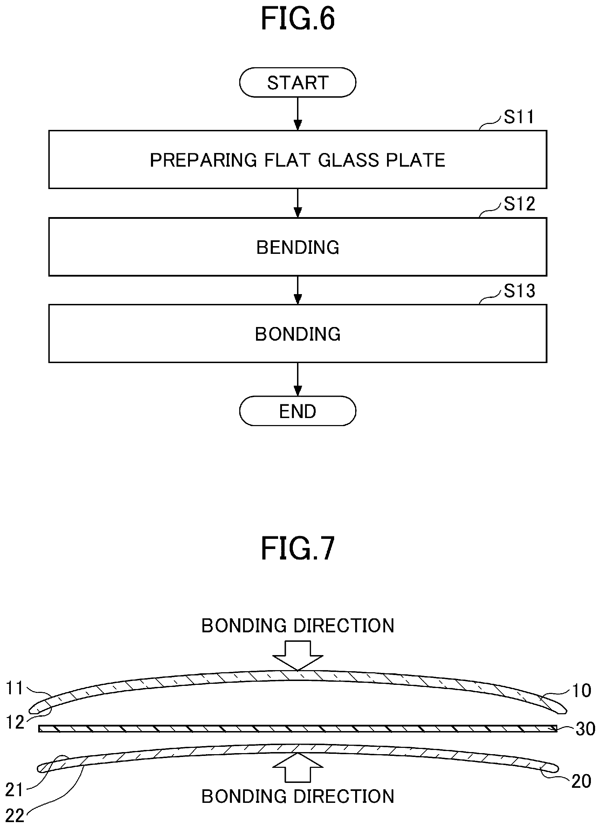

A method for producing laminated glass for vehicle according to the embodiment of the present disclosure will now be described. FIG. 6 is a flowchart illustrating an example of the method for producing laminated glass for vehicle according to the present embodiment. As illustrated in FIG. 6, the method for producing laminated glass for vehicle according to the present embodiment includes a flat glass plate preparing step (Step S11) of preparing flat glass plates, a bending step (Step S12) of bending the prepared flat glass plates, and a bonding step (Step S13) of bonding the two bent glass plates.

As illustrated in FIG. 7, in the bonding step (Step S13) of the method for producing laminated glass for vehicle according to the present embodiment, when two curved glass plates (the vehicle-exterior side glass plate 10 and the vehicle-interior side glass plate 20) having different curvatures are bonded to each other, the vehicle-exterior side glass plate 10 deforms in a direction in which the curvature reduces, and the vehicle-interior side glass plate 20 deforms in a direction in which the curvature increases. As a result, hoop stress is induced in each of the vehicle-exterior side glass plate 10 and the vehicle-interior side glass plate 20. As illustrated in FIG. 4, tensile stress is induced at the outer periphery of the vehicle-exterior side glass plate 10 in the circumferential direction of the first surface 11, and as illustrated in FIG. 5, compressive stress is induced at the outer periphery of the fourth surface 22 of the vehicle-interior side glass plate 20 in the circumferential direction. In the method for producing laminated glass for vehicle according to the present embodiment, in the bonding step (Step S13), when the vehicle-exterior side glass plate 10 and the vehicle-interior side glass plate 20 are bonded to each other, the hoop stress induced in the respective glass plates due to the difference in the curvatures of the respective glass plates is used to adjust the surface stress of the vehicle laminated glass 1 and to adjust the strength of the vehicle laminated glass 1.

Hereinafter, each step will be described.

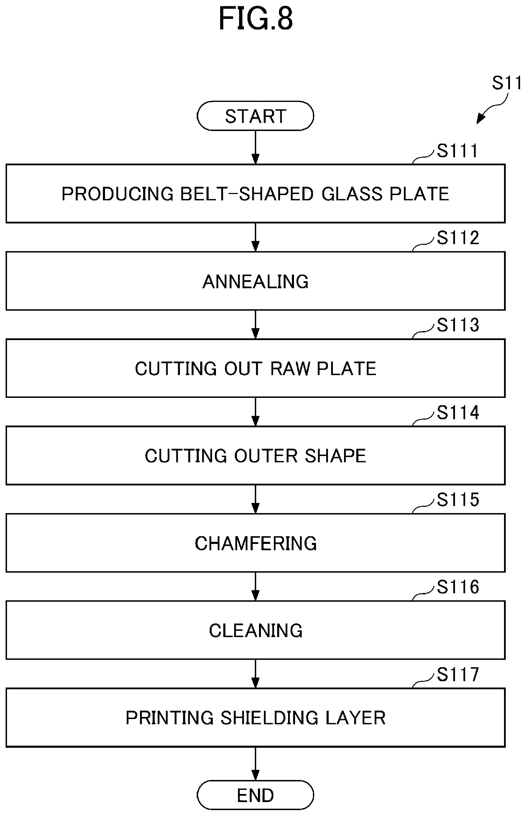

As illustrated in FIG. 8, the flat glass plate preparing step (Step S11) includes producing a long belt-shaped glass plate by a float method, a roll-out method or the like (belt-shaped glass plate producing step: Step S111), annealing the belt-shaped glass plate (annealing step: Step S112), cutting out raw plates from the belt-shaped glass plate (cutting step: Step S113), cutting the raw plates into a desired outer shape (cutting step: Step S114), chamfering (chamfering step: Step S115), cleaning (cleaning step: Step S116), and printing a shielding layer (printing step: Step S117).

The order of these steps (Step Sill to Step S117) may be partially changed. Furthermore, some of the processes (Step S111 to Step S117) may be changed or omitted, or another process may be included between any of the processes (Step S111 to Step S117). For example, one or more additional cleaning steps other than the cleaning step (Step S116) may be included between any steps from the annealing step (Step S112) to the chamfering step (Step S115).

Next, as illustrated in FIG. 6, after the flat glass plate preparing step (Step S11), the bending step (Step S12) is performed. In the bending step (Step S12), flat glass plates are bent by heating the plates to near the softening point or to the softening point or higher. Thereby, two curved flat glass plates (the vehicle-exterior side glass plate 10 and the vehicle-interior side glass plate 20) are obtained. The compressive stress is induced at the most peripheral edge side of each of the vehicle-exterior side glass plate 10 and the vehicle-interior side glass plate 20 in a direction parallel to the circumferential direction of the first surface 11 and the fourth surface 22, respectively.

The bending may be gravity bending in which the flat glass plate is placed on a ring mold and bent by its own weight in a heating furnace, press bending in which the flat glass plate is sandwiched and pressed between a ring die (lower die) and a press die (upper die), or a combination thereof.

The bending may be performed by bending the flat glass plate alone, or may be performed in a state in which the two flat glass plates (the vehicle-exterior side glass plate 10 and the vehicle-interior side glass plate 20) to be bonded in the bonding step (Step S13) are stacked. In either case, the flat glass plate is curved so as to be bulged downward (downward in the vertical direction).

The heating temperature of the flat glass plate at the time of bending may be 550°C to 700°C. The bending step (Step S12) may be single bending in which the flat glass plate is bent only in one direction, for example, only in the front-rear direction or the up-down direction of the automobile when the flat glass plate is provided on the opening of the automobile, or may be double bending in which the flat glass plate is bent both in the front-rear direction and in the up-down direction.

The curvature radii of the two flat glass plates (the vehicle-exterior side glass plate 10 and the vehicle-interior side glass plate 20) obtained by the bending step (Step S12) may be 1000 mm to 100000 mm. The curvature radii of the vehicle-exterior side glass plate 10 and the vehicle-interior side glass plate 20 in the vehicle laminated glass 1 are made different from each other, so that the curvature of the vehicle-exterior side glass plate 10 and the vehicle-interior side glass plate 20 differs.

The vehicle-exterior side glass plate 10 and the vehicle-interior side glass plate 20 are each curved and bulged in one direction, the vehicle-exterior side glass plate 10 has a first curvature in at least a part of the main surfaces (the first surface 11 and the second surface 12), and the vehicle-interior side glass plate 20 has a second curvature smaller than the first curvature in at least a part of the main surfaces (the first surface 21 and the second surface 22) .

The magnitudes of the first curvature and the second curvature are not particularly limited, and can be set as appropriate in accordance with the sizes, shapes, and the like of the vehicle-exterior side glass plate 10 and the vehicle-interior side glass plate 20.

The regions of the first curvature and the second curvature are not particularly limited, and can be set as appropriate in accordance with the sizes, shapes, and the like of the vehicle-exterior side glass plate 10 and the vehicle-interior side glass plate 20. The first curvature and the second curvature may be formed on the entire main surfaces of the vehicle-exterior side glass plate 10 and the vehicle-interior side glass plate 20, or may be formed only on the outer peripheries of the vehicle-exterior side glass plate 10 and the vehicle-interior side glass plate 20 and the peripheral regions thereof.

Although the first curvature is larger than the second curvature in the present embodiment, the first curvature may be smaller than the second curvature as long as the first curvature is different from the second curvature.

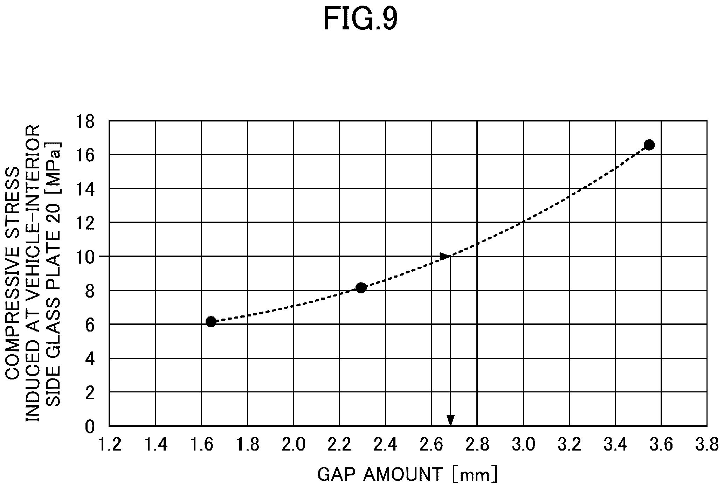

The maximum gap (gap length) between the vehicle-exterior side glass plate 10 and the vehicle-interior side glass plate 20 is preferably 2.7 mm, more preferably 2.3 mm, and further preferably 1.7 mm. FIG. 9 illustrates an example of the relationship between the gap length and the compressive stress induced at the outer periphery of the vehicle-interior side glass plate 20 in the circumferential direction. As illustrated in FIG. 9, the compressive stress induced at the vehicle-interior side glass plate 20 can be suppressed to less than or equal to a predetermined value (for example, 10 MPa) in a case where the gap length is within 2.7 mm. Furthermore, even in a case where the gap length is 1.7 mm, about 6 MPa of the compressive stress is induced at the vehicle-interior side glass plate 20. Therefore, as long as the gap length between the vehicle-exterior side glass plate 10 and the vehicle-interior side glass plate 20 before the vehicle-exterior side glass plate 10 and the vehicle-interior side glass plate 20 are bonded to each other is less than or equal to 2.7 mm, the compressive stress is induced at the vehicle-interior side glass plate 20 to such an extent that the compressive force does not become excessively large. Thus, the strength of the vehicle laminated glass 1 is easily adjusted.

Next, as illustrated in FIG. 6, the bonding step (Step S13) is performed. In the bonding step (Step S13), the two glass plates (the vehicle-exterior side glass plate 10 and the vehicle-interior side glass plate 20) bent in the bending step (Step S12) are bonded to each other through the interlayer film 30 to obtain the vehicle laminated glass 1.

The bonding step (Step S13) may include a step of sandwiching the interlayer film 30 between the two glass plates (the vehicle-exterior side glass plate 10 and the vehicle-interior side glass plate 20) to form a laminate and pre-pressure-bonding the laminate by a rubber pack method or a nip roller method, and then a step of heating and pressurizing the laminate in an autoclave to perform actual pressure-bonding.

When the vehicle-exterior side glass plate 10 and the vehicle-interior side glass plate 20 are bonded to each other through the interlayer film 30 (see FIG. 7), the vehicle-exterior side glass plate 10 is deformed in a direction in which the bend becomes shallow, and the vehicle-interior side glass plate 20 is deformed in a direction in which the bend becomes deep. As a result, the vehicle-exterior side glass plate 10 is deformed so as to reduce its curvature, the vehicle-interior side glass plate 20 is deformed so as to increase its curvature, and the hoop stress is induced in each of the vehicle-exterior side glass plate 10 and the vehicle-interior side glass plate 20. As illustrated in FIG. 4, the tensile stress is induced as the hoop stress at the outer periphery of the vehicle-exterior side glass plate 10 in the circumferential direction, and as illustrated in FIG. 5, the compressive stress is induced as the hoop stress at the outer periphery of the vehicle-interior side glass plate 20 in the circumferential direction. Furthermore, in the vehicle-exterior side glass plate 10, the compressive stress is induced in a direction orthogonal to the circumferential direction thereof. Also, in the vehicle-interior side glass plate 20, the tensile stress is induced in a direction orthogonal to the circumferential direction thereof.

As described above, the method for producing laminated glass for vehicle according to the present embodiment includes the bending step (Step S12) and the bonding step (Step S13). In the bonding step (Step S13), since the vehicle-exterior side glass plate 10 and the vehicle-interior side glass plate 20 are bonded to each other through the interlayer film 30, the vehicle-exterior side glass plate 10 is deformed so that the first curvature becomes smaller and the vehicle-interior side glass plate 20 is deformed so that the second curvature becomes larger. Thereby, the tensile stress is induced at the outer periphery of the first surface 11 of the vehicle-exterior side glass plate 10 in the circumferential direction (see FIG. 4), and the compressive stress is induced at the outer periphery of the fourth surface 22 of the vehicle-interior side glass plate 20 in the circumferential direction (see FIG. 5). In the method for producing laminated glass for vehicle according to the present embodiment, the first curvature of the vehicle-exterior side glass plate 10 and second curvature of the vehicle-interior side glass plate 20 are adjusted in the bending step (Step S12), and the amount of deformation occurring in each of the vehicle-exterior side glass plate 10 and the vehicle-interior side glass plate 20 when are the glass plates are bonded together through the interlayer film 30 is adjusted in the bonding step (Step S13). Accordingly, the strength of the tensile stress induced at the outer periphery of the first surface 11 of the vehicle-exterior side glass plate 10 in the circumferential direction and the strength of the compressive stress induced at the outer periphery of the fourth surface 22 of the vehicle-interior side glass plate 20 in the circumferential direction can be adjusted. As a result, the surface stress induced at the vehicle laminated glass 1 including the tensile stress that is the roof stress induced at the vehicle-exterior side glass plate 10 and the compressive stress that is the roof stress induced at the vehicle-interior side glass plate 20 can be adjusted, so that the strength of the vehicle laminated glass 1 can be changed. According to the method for producing laminated glass for vehicle of the present embodiment, the vehicle laminated glass 1 in which the strength is adjusted to a predetermined magnitude can therefore be obtained.

Furthermore, in the method for producing laminated glass for vehicle according to the present embodiment, in the bonding step (Step S13), since the vehicle-exterior side glass plate 10 and the vehicle-interior side glass plate 20 are bonded to each other through the interlayer film 30, in addition to the above hoop stress induced at each of the vehicle-exterior side glass plate 10 and the vehicle-interior side glass plate 20, the compressive stress is induced at the vehicle-exterior side glass plate 10 in a direction orthogonal to the circumferential direction and the tensile stress is induced at the vehicle-interior side glass plate 20 in a direction orthogonal to the circumferential direction. According to the method for producing laminated glass for vehicle of the present embodiment, since the compressive stress and tensile stress are also used for adjusting the magnitude of the surface stress applied to the vehicle laminated glass 1, the vehicle laminated glass 1 in which the strength is more accurately adjusted to a predetermined magnitude can be obtained.

In particular, since the vehicle laminated glass 1 is applied to a windshield of a vehicle, a shielding portion is provided at the outer periphery of the vehicle laminated glass 1. Therefore, the strength of the vehicle-interior side glass plate 20 is likely to decrease. The strength of the vehicle-exterior side glass plate 10, however, does not appreciably change. According to the method for producing laminated glass for vehicle of the present embodiment, even in a case where the laminated glass is applied to a windshield of a vehicle, the strength of the windshield can be adjusted to a predetermined magnitude in consideration of the influence of the shielding portion.

In general, in a case where an occupant (cyclist) of a bicycle, a two wheeled vehicle, or the like has a frontal collision with a vehicle such as an automobile, the position at which the cyclist's body collides with the automobile is higher than the position at which a pedestrian's body collides with the automobile, and tends to be mainly a windshield. Furthermore, even for a pedestrian, in the case of a vehicle having a short front nose, the pedestrian's body tends to easily collide with the windshield when the cyclist has a frontal collision with the vehicle due to the structure of the front portion of the vehicle.

Furthermore, the glass plate originally has a strength distribution in plane, and the strength of the glass plate is usually probabilistically defined by a safety factor, a failure probability, and the like. Therefore, even if the strength of the entire window glass is appropriate, there may be localized regions with excessively high strength (hereinafter also referred to as high-strength regions) in the plane of the window glass, and when a pedestrian or a cyclist (hereinafter, also referred to as a pedestrian or the like) collides with such a high-strength region, the window glass is unlikely to break. It is because that the window glass cannot sufficiently absorb impact due to the collision of the pedestrian or the like, and is highly likely to damage a human body.

In order to decrease the strength in the high-strength region as described above, it is conceivable to decrease the whole strength of a window glass such as a windshield by changing the composition, the production method, and the like of the window glass. However, in such a case, since the strength decreases even in a region where the strength in plane is relatively low, the toughness required for the glass for the automobile window may not be ensured. Therefore, it is important for the window glass to protect the body of a pedestrian or the like during a collision with a vehicle by reducing or eliminating a region in which the strength is excessively high and making the strength distribution in plane as uniform as possible.

In the present embodiment, by decreasing the strength of the vehicle laminated glass 1, the vehicle laminated glass 1 is made to be easily broken when a pedestrian or the like collides with a vehicle. As a result, the vehicle laminated glass 1 can absorb the impact caused by the collision of the pedestrian or the like, and can reduce the damage to the body of the pedestrian or the like. Since the strength of the vehicle laminated glass 1 obtained by the method for producing laminated glass for vehicle according to the present embodiment can be reduced to a predetermined magnitude, body protection performance with respect to a pedestrian or the like during a collision of the pedestrian or the like with a vehicle is improved by providing the vehicle laminated glass 1 to the vehicle.

In the method for producing laminated glass for vehicle according to the present embodiment, the thicknesses of the vehicle-exterior side glass plate 10 can be 1.1 mm to 3.5 mm, and the thicknesses of the vehicle-interior side glass plate 20 can be 0.5 mm to 2.5 mm. Since the vehicle-exterior side glass plate 10 can be made thicker than the vehicle-interior side glass plate 20, while ensuring the rigidity required for the vehicle laminated glass 1 by the vehicle-exterior side glass plate 10, the vehicle laminated glass 1 can be made lightweight by reducing the thickness of the vehicle-interior side glass plate 20. That is, according to the method for producing laminated glass for vehicle of the present embodiment, the strength of the vehicle laminated glass 1 is changed while ensuring the rigidity of the vehicle laminated glass 1 and reducing the weight thereof.

When the vehicle-exterior side glass plate 10 and the vehicle-interior side glass plate 20 are bonded to each other, the amount of elastic deformation of the vehicle-exterior side glass plate 10 can be made smaller than the amount of elastic deformation of the vehicle-interior side glass plate 20. As described above, the strength of the vehicle laminated glass 1 is likely to greatly depend on the tensile stress induced at the outer periphery of the vehicle-exterior side glass plate 10. In the method for producing laminated glass for vehicle according to the present embodiment, since the vehicle-exterior side glass plate 10 can be made thicker than the vehicle-interior side glass plate 20, the occurrence of cracks or the like in the vehicle-exterior side glass plate 10 in the bonding step (Step S13) can be reduced.

In the method for producing laminated glass for vehicle according to the present embodiment, the thickness difference between the vehicle-exterior side glass plate 10 and the vehicle-interior side glass plate 20 can be made less than or equal to 0.7 mm. Since the vehicle-exterior side glass plate 10 can be thicker than the vehicle-interior side glass plate 20, in a case where the thickness difference between the vehicle-exterior side glass plate 10 and the vehicle-interior side glass plate 20 is less than or equal to 0.7 mm, the vehicle laminated glass 1 can be adjusted to a predetermined size while ensuring the rigidity of the vehicle laminated glass 1 and reliably achieving weight reduction.

In the method for producing laminated glass for vehicle according to the present embodiment, the maximum gap (gap length) between the vehicle-exterior side glass plate 10 and the vehicle-interior side glass plate 20 before the vehicle-exterior side glass plate 10 and the vehicle-interior side glass plate 20 are bonded to each other can be 2.7 mm. The compressive stress induced at the vehicle-interior side glass plate 20 can be suppressed to less than or equal to a predetermined value (for example, 10 MPa) in a case where the gap length is within 2.7 mm. Therefore, in the method for producing laminated glass for vehicle according to the present embodiment, by setting the gap length between the vehicle-exterior side glass plate 10 and the vehicle-interior side glass plate 20 before the vehicle-exterior side glass plate 10 and the vehicle-interior side glass plate 20 are bonded to each other to less than or equal to 2.7 mm, the increase of the compressive stress induced at the vehicle-interior side glass plate 20 is suppressed. Therefore, the strength of the vehicle laminated glass 1 is easily decreased, and easily adjusted to a predetermined magnitude.

In the method for producing laminated glass for vehicle according to the present embodiment, the tensile stress induced at the outer periphery of the vehicle-exterior side glass plate 10 in the circumferential direction is induced in a region that is within 100 mm from the outer periphery of the vehicle-exterior side glass plate 10 in the in-plane direction. The influence of the tensile stress on the strength of the vehicle-exterior side glass plate 10 can be reliably decreased. Therefore, according to the method for producing laminated glass for vehicle of the present embodiment, the strength of the vehicle laminated glass 1 can be decreased and easily adjusted to a predetermined magnitude.

In the method for producing laminated glass for vehicle according to the present embodiment, the compressive stress induced at the outer periphery of the vehicle-interior side glass plate 20 in the circumferential direction is induced in a region that is within 100 mm from the outer periphery of the vehicle-interior side glass plate 20 in the in-plane direction. The influence of the compressive stress on the strength of the vehicle-interior side glass plate 20 can be reliably increased. Therefore, according to the method for producing laminated glass for vehicle of the present embodiment, the strength of the vehicle laminated glass 1 can be easily adjusted to a predetermined magnitude.

While one embodiment has been described, the embodiment has been presented by way of example only, and is not intended to limit the scope of the disclosure. The above-described embodiment can be implemented in various other forms, and various combinations, omissions, replacements, changes, and the like can be made without departing from the gist of the disclosure. The embodiment and modifications thereof are included in the scope and gist of the disclosure, and are included in the disclosure described in the claims and the scope equivalent thereto.

The present application claims priority under Japanese Patent Application No. 2021-071149, filed April 20, 2021, and the entire contents of Japanese Patent Application No. 2021-071149 are hereby incorporated by reference.

### Description of Symbols

- 1: vehicle laminated glass
- 10: vehicle-exterior side glass plate
- 11: first surface
- 12: second surface
- 20: vehicle-interior side glass plate
- 21: third surface
- 22: fourth surface
- 30: interlayer film

## Claims

1. A method for producing laminated glass for vehicle in which a first glass plate at least partially having a first curvature and a second glass plate at least partially having a second curvature that is lower than the first curvature are bonded to each other through an interlayer film, the method comprising:
bending flat glass plates to obtain the first glass plate at least partially having the first curvature and the second glass plate at least partially having the second curvature; and
bonding the first glass plate and the second glass plate through the interlayer film,
wherein, in the bonding, by bonding the first glass plate and the second glass plate through the interlayer film, the first glass plate is deformed such that the first curvature is reduced and the second glass plate is deformed such that the second curvature is increased, thereby adjusting tensile stress induced at an outer periphery of a main surface of the first glass plate in a circumferential direction and compressive stress induced at an outer periphery of a main surface of the second glass plate in a circumferential direction, so that surface stress of the laminated glass for vehicle including the tensile stress and the compressive stress is adjusted.

2. The method for producing laminated glass for vehicle according to claim 1,
wherein a thickness of the first glass plate is 1.1 mm to 3.5 mm, and
wherein a thickness of the second glass plate is 0.5 mm to 2.5 mm.

3. The method for producing laminated glass for vehicle according to claim 2, wherein a difference between the first glass plate and the second glass plate is less than or equal to 0.7 mm.

4. The method for producing laminated glass for vehicle according to claim 1, wherein a maximum gap between the first glass plate and the second glass plate before the first glass plate and the second glass plate are bonded to each other is 2.7 mm.

5. The method for producing laminated glass for vehicle according to claim 1, wherein the tensile stress induced at the outer periphery of the first glass plate in the circumferential direction is induced in a region that is within 100 mm from the outer periphery of the first glass plate in an in-plane direction.

6. The method for producing laminated glass for vehicle according to claim 1, wherein the compressive stress induced at the outer periphery of the second glass plate in the circumferential direction is induced in a region that is within 100 mm from the outer periphery of the second glass plate in an in-plane direction.

7. The method for producing laminated glass for vehicle according to claim 1, wherein the laminated glass for vehicle is a windshield.

8. An automobile comprising the laminated glass for vehicle obtained by the method for producing laminated glass for vehicle of any one of claims 1 to 7.
